# EUROPÄISCHE PATENTSCHRIFT

(11) **EP 1 340 642 B1**
(45) Veröffentlichungstag und Bekanntmachung des Hinweises auf die Patenterteilung: **27.05.2009**
(21) Anmeldenummer: 03000993.0
(22) Anmeldetag: 17.01.2003
(51) Int. Cl.: B60J 5/10, B62D 29/04, E05B 65/19

(54) **Fahrzeug-Karosseriebereich mit einem durch eine Ausnehmung zugänglichen Einsatz**
Vehicle body area with an insert accessible by means of a recess
Partie de carrosserie de véhicule avec un insert accessible parmi un évidement

(30) Priorität: 22.02.2002 DE 10207507
(43) Veröffentlichungstag der Anmeldung: 03.09.2003
(73) Patentinhaber: Volkswagen Aktiengesellschaft, 38436 Wolfsburg (DE)
(72) Erfinder: Tran, Ky-Tu, 38108 Braunschweig (DE); Tilch, Thomas, 38118 Braunschweig (DE); Arnheim, Hans-Rudolf, 38477 Jembke (DE); Hansen, Ralf, 38114 Braunschweig (DE); Meyer, Dieter, 38442 Wolfsburg (DE)

(56) Entgegenhaltungen:
- DE-A- 4 033 622
- DE-A- 19 803 978
- FR-A- 2 768 085
- US-A- 6 123 384
- US-B1- 6 174 016
- PATENT ABSTRACTS OF JAPAN vol. 1997, no. 09, 30. September 1997 (1997-09-30) & JP 09 136572 A (HONDA MOTOR CO LTD), 27. Mai 1997 (1997-05-27)

## Beschreibung

Die Erfindung betrifft einen Fahrzeug-Karosseriebereich gemäß dem Oberbegriff des Patentanspruchs 1. Ein solcher Bereich wird in der DE 198 03 978 A offenbart.

Karosseriebereiche dieses Aufbaues sind insbesondere an Kraftfahrzeug-Heckklappen bekannt; der Einsatz dient außer als Griffmulde häufig auch zur Unterbringung einer Schloßbetätigung, gegebenenfalls eines kompletten Schließzylinders, und/oder zur Lagerung einer um eine querverlaufende Schwenkachse schwenkbaren Abdeckklappe, die gegebenenfalls mit dem Emblem des Fahrzeugherstellers versehen ist und im geöffneten Zustand zugleich als Griff zur Betätigung der Heckklappe dient.

Infolge der Tatsache, daß der Einsatz in der Regel auch, wie beschrieben, zur Lagerung anderer Teile ausgebildet sein muß, ist es nicht möglich, ihn durch entsprechende Formgebung der Außenhaut (Außenblech oder Kunststoffteil) einteilig mit dieser herzustellen. Er bildet daher ein separates Bauteil, das im Bereich der Ausnehmung an Innen- und/oder Außenhaut des Karosseriebereichs festgelegt werden muß. In der Regel wird man zur Vermeidung von Schwingungen im Fahrbetrieb die Festlegung im Bereich beider Ränder des Einsatzes, also sowohl an der Außen- als auch an der Innenhaut, vornehmen. Selbst wenn die Befestigung an der Außenhaut durch Befestigungsmittel, wie einen Kleber, erfolgt, die keine von außen erkennbaren Verformungen des Außenblechs hervorrufen, ist es doch schwierig, den Bereich dieser Befestigung gleichsam unsichtbar zu machen, so daß er den ästhetischen Eindruck der Karosserie nicht beeinträchtigt. So ist es bekannt, den außenhautseitigen Randbereich des Einsatzes den benachbarten Rand der Außenhaut übergreifen zu lassen und silbrig einzufärben, so daß an dieser Befestigungsstelle der Eindruck eines Zierringes entsteht. Diese Maßnahmen können aber gerade darauf hinweisen, daß dort eine Befestigungsstelle vorliegt.

Der Erfindung liegt die Aufgabe zugrunde, einen gattungsgemäßen Karosseriebereich zu schaffen, der ohne Beeinträchtigung der Funktionen des Einsatzes (Griffkörper, Lagerung verschiedener zusätzlicher Bauteile) die Befestigungen des Einsatzes oder Ränder desselben von außen nicht erkennen läßt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein besonderer Vorteil der Erfindung ist darin zu sehen, daß sie die definierte Aufgabe mit sehr einfachen Maßnahmen, die auch fertigungstechnisch leicht beherrschbar sind, löst, insbesondere keinen zusätzlichen Bauteilaufwand erfordert. Wesentliche Merkmale der Erfindung sind das Vorsehen einer in Richtung auf das Innenblech weisenden Abstellung des Randes der Außenhaut und die Anordnung des der Außenhaut zugekehrten Randbereichs des Einsatzes gleichsam "unter" dieser Abstellung. Dabei kann dieser Randbereich des Einsatzes an der Außenhaut bevorzugt mittels Verklebung gehalten sein; eine Befestigung an der Innenhaut ist hinsichtlich der Sichtbarkeit weniger kritisch.

Vier Ausführungsbeispiele der Erfindung werden im folgenden für den bevorzugten Einsatz bei der Erfindung, nämlich eine Griffmulde einer Kraftfahrzeug-Heckklappe, anhand der Zeichnung erläutert, deren Figuren senkrechte Teilschnitte durch Kraftfahrzeug-Heckklappen wiedergeben.

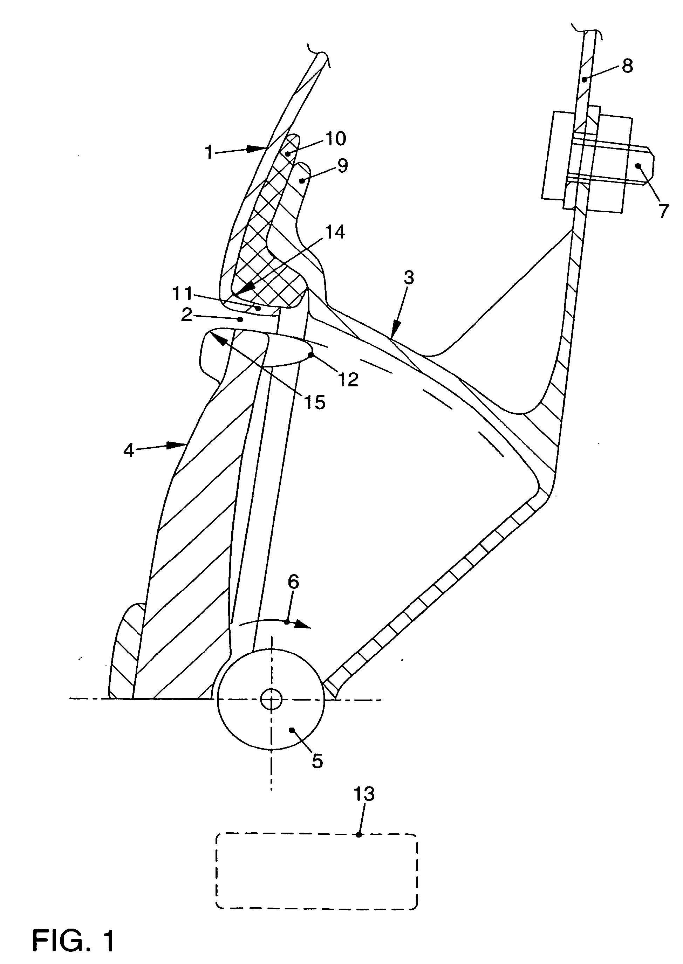

Betrachtet man zunächst Figur 1, so erkennt man die aus Blech oder Kunststoff bestehende Außenhaut 1, die bei 2 eine in diesem Ausführungsbeispiel kreisrunde Ausnehmung zur Schaffung eines Zugangs zur einer Griffmulde aufweist, die durch den Einsatz 3 gebildet ist.

Im normalen Fahrbetrieb ist die Ausnehmung 2 weitgehend verschlossen durch die Abdeckklappe 4, die in dem Einsatz 3 über die Schwenkachse 5 gelagert ist. Dargestellt ist die Abdeckklappe 4 in ihrer Schließlage; nach Verschwenken im Sinne des Pfeils 6 steht die untere Hälfte der Abdeckklappe 4 über die eigentliche Karosserie über, so daß sie als Handhabe zum Hochschwenken der Heckklappe in ihre geöffnete Lage dienen kann. Gegebenenfalls gibt sie dann auch eine im Einsatz 3 vorgesehene Schloßbetätigung (Schließzylinder 13) frei.

Der Einsatz 3 ist außer bei 7 an der Innenhaut 8 der Karosserie im Bereich seines der Außenhaut 1 zugekehrten Randes 9 an der Außenhaut befestigt, hier mittels der Kleberraupe 10. Damit dieser Bereich von außen - auch bei in geöffnete Lage geschwenkter Abdeckklappe 4 - möglichst unsichtbar ist, besitzt die Außenhaut 1 die in Richtung auf die Innenhaut 8 weisende Abstellung 11, die also die Ausnehmung 2 nach außen begrenzt, und liegt der Randbereich 9 des Einsatzes 3 gleichsam im "Sichtschatten" der Abstellung 11, ist also durch diese abgedeckt.

Die Abdeckklappe 4 besitzt eine in Richtung auf das Innenblech weisende Randpartie 12, und zwar solcher Formgebung, daß die beiden Randbereiche 11 und 12 die Schwenkbewegungen der Abdeckklappe 4 um die Schwenkachse 5 nicht behindern. Abstellung 11 und Randpartie 12 haben an ihren Fußbereichen Übergangsradien 14 bzw. 15, die im Hinblick auf einen gewünschten optischen Eindruck der Fuge zwischen beiden gewählt sind. Als zweckmäßig hat sich ein Abrundungsradius von etwa 1,5 mm erwiesen.

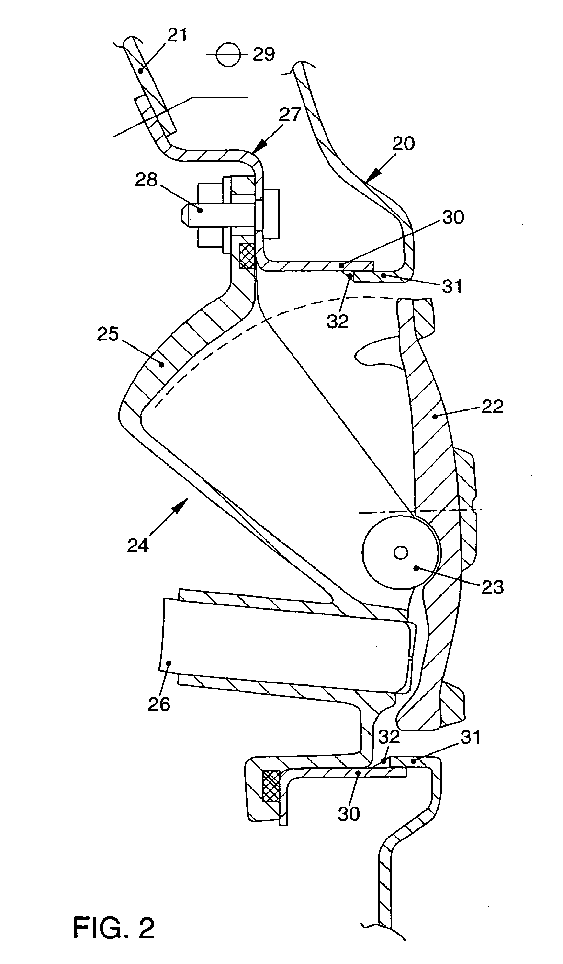

In Figur 2 sind die Außenhaut mit 20, die Innenhaut mit 21, die Abdeckklappe mit 22 und der die Griffmulde bildende und zugleich die Schwenkachse 23 für die Klappe 22 tragende Einsatz allgemein mit 24 bezeichnet. In diesem Ausführungsbeispiel besteht der Einsatz 24 aus dem Hauptteil 25, das bei 26 wiederum einen Schließzylinder aufnimmt, und dem bevorzugt aus Blech bestehenden Profilteil 27, mit dem der Hauptteil 25 mittels über den Umfang des Einsatzes 24 gleichmäßig verteilter Schrauben 28 verbunden ist. Beispielsweise sind drei derartige Schrauben vorgesehen. Das Profilteil 27 überbrückt den Abstand zwischen Außenhaut 20 und 21 und ist mit beiden verbunden. Die Verbindung mit der Innenhaut ist bei 29 angedeutet; es handelt sich um Punktschweißverbindungen, die über einen Teil des Umfangs verteilt sind. Zur Verbindung mit der Außenhaut 20 dient eine Art Kragen 30, der so verläuft, daß er die Abstellung 31 der Außenhaut 20 auf ihrer der Ausnehmung abgekehrten Außenseite berührt. Dort ist mittels Laserschweißung oder -lötung bei 32 eine Verbindung zwischen Profilteil 27 einerseits und Außenhaut 20 andererseits geschaffen.

In diesem und den noch zu beschreibenden weiteren Ausführungsbeispielen bildet also das hier mit 27 bezeichnete Profilteil als Bestandteil der Griffmulde den Randbereich des Einsatzes 24, der von der hier mit 31 bezeichneten Abstellung der Außenhaut 20 überdeckt ist, so daß seine Verbindung mit der Außenhaut unsichtbar bleibt.

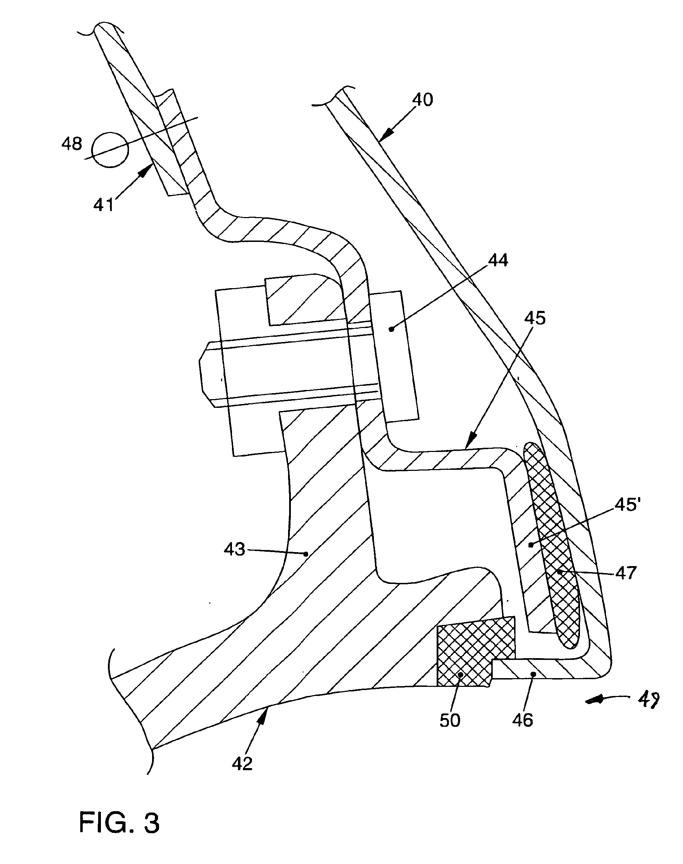

In Figur 3 sind die Außenhaut mit 40, die Innenhaut mit 41, der Einsatz allgemein mit 42, sein Hauptbestandteil mit 43 und das mittels Schrauben 44 mit ihm verbundene Profilteil mit 45 bezeichnet. Wiederum weist die Außenhaut 40 eine in Richtung auf die Innenhaut 41 weisende Abstellung 46 auf, die den der Außenhaut zugekehrten Randbereich des Einsatzes 42, im wesentlichen gebildet durch den Flansch 45' des Profilteils 45, zusammen mit der zu seiner Festlegung an der Außenhaut 40 dienenden Kleberraupe 47 abdeckt. Der Verbindung des Profilteils 45 mit der Innenhaut 41 und damit der Befestigung des Einsatzes 42 an der Innenhaut 41 dienen wiederum Schweißpunkte 48.

Auch hier bildet selbstverständlich die Abstellung 46 die äußere Begrenzung der Ausnehmung 49.

Zusätzlich ist hier bei 50 ein Dichtring zwischen dem Hauptbestandteil 43 des Einsatzes 42 einerseits und der Abstellung 46 der Außenhaut 40 andererseits vorgesehen. Er braucht nicht besonders abgedeckt zu werden, um dem Blick verborgen zu bleiben, da er bei hinreichender Länge der Abstellung 46 so weit in die Ausnehmung 49 hinein verlagert ist (in Figur 3 nach links), das er schon aus diesem Grunde praktisch unsichtbar ist.

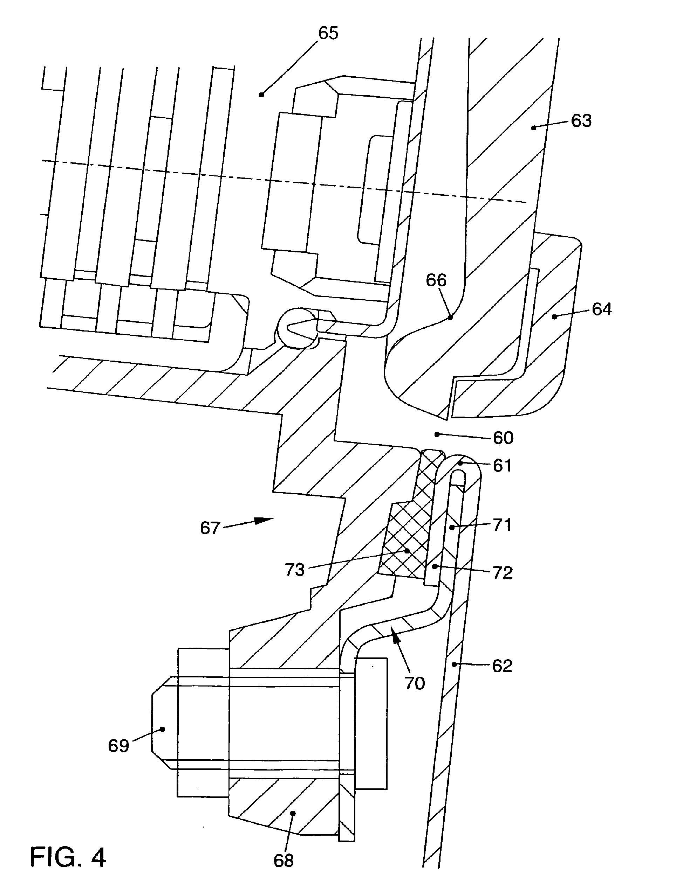

Betrachtet man nun die Ausführungsform nach Figur 4, so ist im wesentlichen nur der Bereich der Ausnehmung 60 zwischen der Abstellung 61 der Außenhaut 62 und der Abdeckklappe 63 dargestellt. Wie bei 64 angedeutet, kann die Abdeckklappe als Träger beispielsweise eines Herstelleremblems des Fahrzeugs benutzt werden.

Unter der geschlossen dargestellten Abdeckklappe 63 erkennt man wiederum bei 64 eine Schloßbetätigung. Die Abdeckklappe 63 ist verständlicherweise wieder um eine senkrecht zur Zeichenebene der Figur 4 verlaufende, oberhalb der Figur zu denkende Schwenkachse zwischen ihrer dargestellten Schließlage und einer Öffnungslage schwenkbar, in der ihr Profil 66 als Handhabe zum Öffnen der Heckklappe dient.

Betrachtet man nun den Aufbau des Griffmuldeneinsatzes 67, so besteht dieser wiederum aus zwei Teilen, nämlich dem Hauptteil 68 und dem mit diesem verschraubten (Schraubverbindungen 69) Profilteil 70, das aus Fertigungs- und Festigkeitsgründen in der Regel aus Blech bestehen wird. Dieses Profilteil 70 besitzt den den abzudeckenden Randbereich des Einsatzes 67 darstellenden Flansch 71, und in diesem Ausführungsbeispiel erfolgt die Abdeckung dieses Randbereichs des Flansches 71 dadurch, daß die Abstellung 61 der Außenhaut 62 durch den rückgebogenen Bereich 72 gleichsam eine Umbördelung für den Flansch 71 darstellt. Bei 73 ist eine Dichtung zwischen dem Hauptteil 68 des Einsatzes 67 und dem abgebogenen Bereich 72 vorgesehen.

Wie auch diese Beschreibung von Ausführungsbeispielen der Erfindung erkennen läßt, löst sie die gestellte Aufgabe in absolut befriedigender Weise mit sehr einfachen, an sich bewährten und konstruktiv beherrschbaren Mitteln.

## Patentansprüche

1. Fahrzeug-Karosseriebereich mit Innen- und Außenhaut (1,8,20,21,40,41,62), einer Ausnehmun (2,49,60) in der außenhant (1,20,40,62) und einem insbesondere als Griffmulde dienenden, durch die Ausnehmung (2,49,60) zugänglichen Einsatz, (3,24,42,67) **gekennzeichnet**, daß ein der Außenhaut (1,20,40,62) zugekehrter Randbereich (9,27,45,70) des Einsatzes (3,24,42,67) von einer in Richtung Innenhaut (8,21,41) weisenden, die Ausnehmung (2,49,60) begrenzenden Abstellung (11,31,46,61) der Außenhaut (1, 20,40,62) abgedeckt ist.

2. Karosseriebereich nach Anspruch 1, **dadurch gekennzeichnet, daß** der abgedeckte Randbereich (9) an der Außenhaut (1) befestigt ist.

3. Karosseriebereich nach Anspruch 1 oder 2, **dadurch gekennzeichnet, daß** in dem Einsatz (3) eine Schloßbetätigung, insbesondere ein Schließzylinder, angeordnet ist.

4. Karosseriebereich nach einem der Ansprüche 1 bis 3, **dadurch gekennzeichnet, daß** in dem Einsatz (3) eine querverlaufende Schwenkachse (5) für eine Abdeckklappe (4) gelagert ist, die eine in ihrer Schließlage in Richtung Innenhaut (8) weisende, dann von der Abstellung (11) umschlossene Randpartie (12) aufweist.

5. Karosseriebereich nach einem der Ansprüche 1 bis 4, **dadurch gekennzeichnet, daß** die Außenhaut-Abstellung (11) und, sofern vorhanden, die Randpartie (12) der Abdeckklappe (4) an ihren Fußbereichen im Hinblick auf eine gewünschte optische Fuge bemessene Übergangsradien (14, 15) aufweisen.

6. Karosseriebereich nach Anspruch 5, **dadurch gekennzeichnet, daß** der Übergangsradius (14) der Außenhaut-Abstellung (11) etwa 1,5 mm beträgt.

7. Karosseriebereich nach einem der Ansprüche 1 bis 6, **gekennzeichnet durch** einen mehrteiligen Einsatz (24,42,67) dessen der Außenhaut (20,40,62) zugekehrter Randbereich durch ein Profilteil (27,35,70) gebildet ist, das zur Befestigung an einem angrenzenden Bereich (25,43,68) des Einsatzes (24,42,67) eingerichtet ist.

8. Karosseriebereich nach Anspruch 7, **dadurch gekennzeichnet, daß** das Profilteil (27) an der Außenhaut-Abstellung (31) auf ihrer der Ausnehmung abgekehrten Seite befestigt (32) ist.

9. Karosseüebereich nach Anspruch 8, **dadurch gekennzeichnet dass** die Befestigung des Profiteils (27) als Laserlötung oder Laserschweißung 32 ausgefürt ist.

10. Karosseriebereich nach Anspruch 7, **dadurch gekennzeichnet, daß** das Profilteil (45) mit einem parallel zur Außenhaut (40) weisenden Flansch (45'), der auf der der Ausnehmung (49) abgekehrten Seite der Außenhaut-Abstellung (46) verläuft, an der Außenhaut (40) befestigt (47) ist.

11. Karosseriebereich nach Anspruch 10, **dadurch gekennzeichnet, dass** die Befestigung des Profilteils (45) als. Klebung (47) ausgeführt ist.

12. Karosseriebereich nach Anspruch 7, **dadurch gekennzeichnet, daß** das Profilteil (70) einen parallel zur Außenhaut (62) verlaufenden, auf dieser aufliegenden Flansch (71) aufweist und die Außenhaut-Abstellung (61) zu einer diesen umgreifenden Bördelung (71, 72) ergänzt ist.

13. Karosseriebereich nach Anspruch 12, **dadurch gekennzeichnet, daß** der an das Profilteil (70) angrenzende Bereich (68) des Einsatzes (67) an einer dem Flansch (71) abgekehrten Fläche der Bördelung (61, 72) dichtend aufliegt (73).

14. Karosseriebereich nach Anspruch 13, **gekennzeichnet durch** einen zwischen Bereich (68) und Bördelung (61,72) angeordneten Profildichtring (73).

15. Karosseriebereich nach einem der Ansprüche 7 bis 14, **dadurch gekennzeichnet, daß** das Profilteil (45) auch an der Innenhaut (41) befestigt ist.

16. Karosseriebereich nach Anspruch 15, **dadurch gekennzeichnet dass** die Befestigung des profilteils (45) an der Innenhant (41) als Schweißung (48) ausgeführt ist.

17. Karosseriebereich nach einem der Ansprüche 7 bis 16, **dadurch gekennzeichnet, daß** das Profilteil (45) mit dem angrenzenden Bereich (43) des Einsatzes (42) verschraubt (44) ist.

18. Karosseriebereich nach Anspruch 17, **gekennzeichnet durch** mehrere Verschraubungen (44) in gleichmäßiger Verteilung über den Umfang des Einsatzes.

## Claims

1. Vehicle body region with an inner and an outer skin (1, 8, 20, 21, 40, 41, 62), with a clearance (2, 49, 60) in the outer skin (1, 20, 40, 62) and with an insert (3, 24, 42, 67) serving, in particular, as a grip recess and accessible through the clearance (2, 49, 60), **characterized in that** an edge region (9, 27, 45, 70)., facing the outer skin (1, 20, 40, 62), of the insert (3, 24, 42, 67)-is covered by a set-off (11, 31, 46, 61) of the outer skin (1, 20, 40, 62), the said set-off pointing in the direction of the inner skin (8, 21, 41) and delimiting the clearance (2, 49, 60).

2. Body region according to Claim 1, **characterized in that** the covered edge region (9) is fastened to the outer skin (1).

3. Body region according to Claim 1 or 2, **characterized in that** a lock actuation assembly, in particular a lock cylinder, is arranged in the insert (3).

4. Body region according to Claim 1 to 3, **characterized in that** the insert (3) has mounted in it a transversely running pivot axis (5) with a cover flap (4) which has an edge portion (12) which, in the closing position of the said cover flap, points in the direction of the inner skin (8) and is then surrounded by the set-off (11).

5. Body region according to one of Claims 1 to 4, **characterized in that** the outer-skin set-off (11) and, if present, the edge portion (12) of the cover flap (4) have, at their foot regions, transition radii (14, 15) dimensioned with a view to a desired visual joint.

6. Body region according to Claim 5, **characterized in that** the transition radius (14) of the outer-skin set-off (11) is about 1.5 mm.

7. Body region according to one of Claims 1 to 6, **characterized by** a multi-part insert (24, 42, 67), for which the edge region facing the outer skin (20, 40, 62) is formed by a profile part (27, 45, 70) which is set up for fastening to an adjacent region (25, 43, 68) of the insert (24, 42, 67).

8. Body region according to Claim 7, **characterized in that in that** the profile part (27) is fastened (32) to the outer-skin set-off (31) on the side of the latter which faces away from the clearance.

9. Body region according to Claim 8, **characterized in that** the fastening of the profile part (27) is carried out as a laser soldering or laser welding (32).

10. Body region according to Claim 7, **characterized in that** the profile part (45) is fastened (47) to the outer skin (40) by means of a flange (45') which points parallel to the outer skin (40) and which runs on that side of the outer-skin set-off (46) which faces away from the clearance (49).

11. Body region according to Claim 10, **characterized**
**in that** the fastening of the profile part (45) is carried out as adhesive bonding (47).

12. Body region according to Claim 7, **characterized in that** the profile part (70) has a flange (71) running parallel to the outer skin (62) and lying on the latter, and the outer-skin set-off (61) is completed to form a crimping (71, 72) surrounding the latter.

13. Body region according to Claim 12, **characterized in that that** region (68) of the insert (67) which is adjacent to the profile part (70) lies (73) sealingly on a surface of the crimping (61, 72), the said surface facing away from the flange (71).

14. Body region according to Claim 13, **characterized by** a profile sealing ring (73) arranged between region (68) and crimping (61, 72).

15. Body region according to one of Claims 7 to 14, **characterized in that** the profile part (45) is also fastened to the inner skin (41).

16. Body region according to Claim 15, **characterized in that** the fastening of the profile part (45) to the inner skin (41) is carried out as welding (48).

17. Body region according to one of Claims 7 to 16, **characterized in that** the profile part (45) is screwed (44) to the adjacent region (43) of the insert (42).

18. Body region according to Claim 17, **characterized by** a plurality of screw connections (44) in a uniform distribution over the circumference of the inset.

## Revendications

1. Partie de carrosserie de véhicule dotée de panneaux extérieur et intérieur (1, 8, 20, 21, 40, 41, 62), d'un évidement (2, 49, 60) prévu dans le panneau extérieur (1, 20, 40, 62) et d'un insert (3, 24, 42, 67) accessible à travers l'évidement (2, 49, 60), et servant notamment de cuvette de préhension, **caractérisée en ce qu'**une des parties de bordure (9, 27, 45, 70) de l'insert (3, 24, 42, 67) opposée au panneau extérieur (1, 20, 40, 62) est recouverte par un arrêt (11, 31, 46, 61) du panneau extérieur (1, 20, 40, 62) orienté en direction du panneau intérieur (8, 21, 41) et délimitant l'évidement (2, 49, 60).

2. Partie de carrosserie selon la revendication 1, **caractérisée en ce que** la partie de bordure (9) recouverte est fixée au panneau extérieur (1).

3. Partie de carrosserie selon la revendication 1 ou 2, **caractérisée en ce qu'**un actionnement de serrure, notamment un cylindre de fermeture, est disposé dans l'insert (3).

4. Partie de carrosserie selon l'une quelconque des revendications 1 à 3, **caractérisée en ce qu'**un axe de pivotement (5) s'étendant transversalement est disposé dans l'insert (3) pour un rabat de revêtement (4) qui comporte une partie de bordure (12) orientée en direction du panneau intérieur (8) dans sa position de fermeture puis entourée par l'arrêt (11).

5. Partie de carrosserie selon l'une quelconque des revendications 1 à 4, **caractérisée en ce que** l'arrêt (11) du panneau extérieur et, si elle existe, la partie de bordure (12) du rabat de revêtement (4), comportent des rayons de transition (14, 15) mesurés par rapport à une jointure optique souhaitée au niveau de leurs parties de plancher.

6. Partie de carrosserie selon la revendication 5, **caractérisée en ce que** le rayon de transition (14) de l'arrêt (11) du panneau extérieur mesure environ 1,5 mm.

7. Partie de carrosserie selon l'une quelconque des revendications 1 à 6, **caractérisée par** un insert (24, 42, 67) en plusieurs parties dont la partie de bordure opposée au panneau extérieur (20, 40, 62) est équipée d'une partie profilée (27, 35, 70) réalisée de façon à être fixée à une partie (25, 43, 68) connexe de l'insert (24, 42, 67).

8. Partie de carrosserie selon la revendication 7, **caractérisée en ce que** la partie profilée (27) est fixée (32) sur le côté opposé à l'évidement au niveau de l'arrêt (31) du panneau extérieur.

9. Partie de carrosserie selon la revendication 8, **caractérisée en ce que** la fixation de la partie profilée (27) prend la forme d'une brasure laser ou d'une soudure laser (32).

10. Partie de carrosserie selon la revendication 7, **caractérisée en ce que** la partie profilée (45) est fixée (47) au panneau extérieur (40) avec une bride (45') orientée parallèlement au panneau extérieur (40), ladite bride s'étendant sur le côté opposé sur l'évidement (49) de l'arrêt (46) du panneau extérieur.

11. Partie de carrosserie selon la revendication 10, **caractérisée en ce que** la fixation de la partie profilée (45) prend la forme d'un collage (47).

12. Partie de carrosserie selon la revendication 7, **caractérisée en ce que** la partie profilée (70) comporte une bride (71) s'étendant parallèlement au panneau extérieur (62) et reposant sur lui et **en ce que** l'arrêt (61) du panneau extérieur est complété par un bord rabattu (71, 72) le ceignant.

13. Partie de carrosserie selon la revendication 12, **caractérisée en ce que** la partie (68) de l'insert (67) connexe à la partie profilée (70) repose (73) de façon étanche contre une surface du bord rabattu (61, 72) opposée à la bride (71).

14. Partie de carrosserie selon la revendication 13, **caractérisée par** une bague d'étanchéité profilée (73) disposée entre la partie (68) et le bord rabattu (61, 72).

15. Partie de carrosserie selon l'une quelconque des revendications 7 à 14, **caractérisée en ce que** la partie profilée (45) est également fixée au panneau intérieur (41).

16. Partie de carrosserie selon la revendication 15, **caractérisée en ce que** la fixation de la partie profilée (45) est réalisée sous la forme d'une soudure (48) au niveau du panneau intérieur (41).

17. Partie de carrosserie selon l'une quelconque des revendications 7 à 16, **caractérisée en ce que** la partie profilée (45) est vissée (44) à la partie (43) connexe de l'insert (42).

18. Partie de carrosserie selon la revendication 17, **caractérisée par** plusieurs ensembles vissés (44) répartis de façon régulière sur l'ensemble de la périphérie de l'insert.
